# EUROPEAN PATENT SPECIFICATION

(11) **EP 0 531 531 B1**
(45) Date of publication and mention of the grant of the patent: **25.09.1996**
(21) Application number: 92901434.8
(22) Date of filing: 20.12.1991
(51) Int. Cl.: H04M 1/02, H04M 1/03

(54) **CORDLESS TELEPHONE SET**
SCHNURLOSES TELEFON
TELEPHONE SANS FIL

(30) Priority: 12.03.1991 JP 13903/91 U
(43) Date of publication of application: 17.03.1993
(73) Proprietor: SEIKO EPSON CORPORATION, Shinjuku-ku Tokyo 163 (JP)
(72) Inventor: MASUJIMA, Ikuo Seiko Epson Corporation, Suwa-shi Nagano 392 (JP)
(74) Representative: Wood, Anthony Charles
(86) International application number: JP9101742
(87) International publication number: WO9217018

(56) References cited:
- DE-A- 3 401 518
- JP-A- 6 021 636
- JP-A-59 135 959
- JP-U- 617 145
- US-A- 3 983 483
- US-A- 4 847 818
- Hatsumei Kyokai Kokai Giho Kogi No. 87-1219 (Hitachi, Ltd.), January 20, 1987 (20. 01. 87).

## Description

### Technical Field

The present invention relates to a cordless telephone in which dial buttons, a speaker, a microphone, a flexible antenna, etc., are provided on a housing made of a sheet-like soft material and a built-in signal processing circuit is composed of a flexible film.

### Background Art

As a result of an increased demand for mobile communication, recently cordless telephones have been rapidly popularized. The cordless telephone permits a conversation with the other party at any place and various types of the cordless telephone, e.g., portable type, automobile type and household type have been prepared.

However, all of the conventional telephones including the cordless telehones have been using molded housings of plastics or the like and it has been impossible to change their shapes once formed. Therefore, the users have been limited with respect to their manners of use. The present invention has been made to provide improvements in these respects and it is an object of the present invention to provide a cordless telephone whose shape and manner of use can be determined independently on the individual circumstances.

### Disclosure of Invention

The present invention comprises a cordless telephone designed so that the cordless telephone has a housing made of a sheet-like soft material such as a silicon rubber sheet whose front surface is a wave surface and back surface is a planar surface, that a signal transmitting and receiving antenna consists of a flexible antenna, that a signal processing circuit made of a flexible film is fixedly mounted within the housing, and that dial buttons, a receiving speaker and a transmitting microphone are arranged on the housing front surface, thereby providing the cordless telephone with sufficient flexibility that permits modification of its shape within a given extent.

Also, the dial buttons, the receiving speaker and the transmitting microphone are fixedly fitted in the wave surface ridges of the housing front surface, thereby allowing the cordless telephone to be easily folded at the wave surface hollows.

### Brief Description of Drawings

Fig. 1 is an external view showing an example of a cordless telephone according to the present invention,
Fig. 2 is a block diagram showing an example of the electric construction of the present invention, and
Fig. 3 is a sectional view showing the mounting portion of the dial button.

### Best Mode for Carrying Out the Invention

Next, the present invention will be described in detail with reference to the drawings.

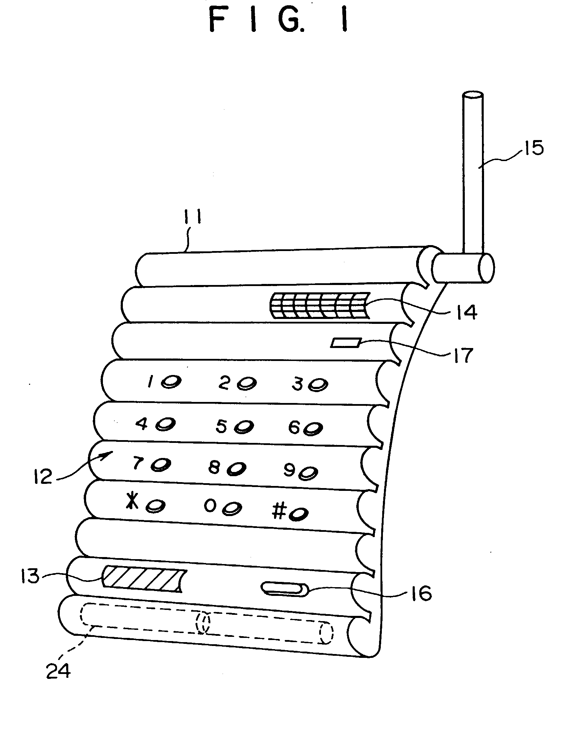

Fig. 1 is an external view showing an example of the cordless telephone according to the present invention. Numeral 11 designates a housing made of a sheet of soft material, e.g., silicon rubber having one surface formed into a wave surface and the other surface formed into a planar surface. With the housing 11, the wave surface serves as its front side so that dial buttons 12 (numerals 1 to 9 designate numerical buttons and symbols # and * indicate functional buttons) are arranged in the central portion and a transmitting microphone 13, a receiving speaker 14, a hook button 16 which is turned on when the telephone is in use, a diode 17 for indicating the state of the hook button 16, etc., are respectively arranged on the upper and lower sides of the former.

Also, rotatably attached to the uppermost part of the housing 11 is a transmitting and receiving flexible antenna 15 made by covering a metal member with silicon rubber or the like and batteries 24 serving as a power source for the telephone are replaceably inserted into the lower most part of the housing 11.

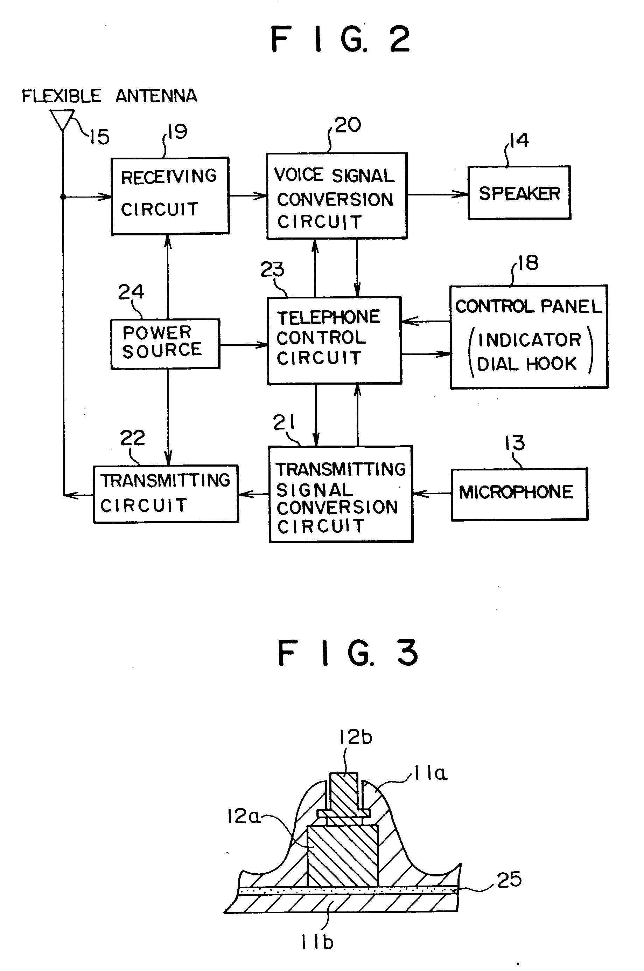

Fig. 2 is a block diagram showing an example of the electric construction of the present invention: The call from the calling party is reproduced by the speaker 14 through the flexible antenna 15, a receiving circuit 19 and a voice signal conversion circuit 20. On the other hand, the call to the party being called is transmitted from the flexible antenna 15 through the microphone 13 which picks up the conversation, a transmitting signal conversion circuit 21 and a transmitting circuit 22. Then, these circuits and a control panel 18 including the dial 12, etc., are controlled by a telephone control circuit 23.

It is to be noted that a handset having the same functions as the speaker 14 and the microphone 13 which are made integral with the housing 11 may be provided separately from the housing 11.

Fig. 3 is a sectional view showing the mounting portion of the dial button. Numeral 11a designates the front surface of the housing 11, 11b the back surface of the housing 11, and 12a a key switch serving as the dial button. The key switch 12a is fixedly fitted in the wave surface ridge of the housing from surface 11a so that only the key top is movable within a given space to effect the switching. Also, provided on the lower side of the key switch 12a is a flexible film base 25 which is also fixedly fitted in the housing 11, and formed on the flexible film base 25 are the receiving circuit 19, the voice signal conversion circuit 20, the transmitting signal conversion circuit 21, the transmitting circuit 22 and the telephone control circuit 23 which are shown in Fig. 2.

It is to be noted that while Fig. 3 shows the relation of the housing 11, the key switch 12a and the flexible film base 25 with one another, the component parts such as the microphone 13 and the speaker 14, which are provided on the housing front surface 11a, are also fixedly fitted in the wave surface ridges of the housing front surface 11a in the like manner as the former component parts. Also, the connections of the component parts to one another are provided by the built-in flexible connectors.

In accordance with this cordless telephone, the housing 11 is constructed so as to be freely folded at the hollow portions of the front surface so that when the telephone is placed on the desired rest or support, it conforms with the shape of the rest. In addition, due to its reduced weight, it is possible to select various manners of use depending on the environments such as using it in a suspended condition or fitting it around the wrist or the like to use it as a portable telephone.

## Claims

1. A cordless telephone of the type which transmits and receives radio waves to make conversations, characterized in that a housing (11) of said telephone is made of a sheet-like soft member having a front surface in the form of a wave surface and a back surface in the form of a planar surface, that a signal transmitting and receiving antenna is in the form of a flexible antenna (15), that a signal processing circuit composed of a flexible film (25) is fixedly mounted in place within said housing, and that dial buttons (12), a receiving speaker (14) and a transmitting microphone (13) are arranged on the front surface of said housing.

2. A cordless telephone as set forth in claim 1, characterized in that said dial buttons (12), said receiving speaker (14) and said transmitting microphone (13) are fixedly fitted in wave surface ridges of said housing front surface.

3. A cordless telephone as set forth in claim 1, characterized in that the housing (11) of said telephone is made of silicon rubber.

## Patentansprüche

1. Schnurloses Telephon, das Funkwellen zur Durchführung von Gesprächen überträgt und empfängt, dadurch gekennzeichnet, daß ein Gehäuse (11) dieses Telephons aus einem plattenartigen weichen Organ besteht, das eine Vorderfläche in Form einer Wellenfläche und eine Rückfläche in Form einer ebenen Fläche aufweist, daß eine Signalübertragungs- und Empfangsantenne in Form einer flexiblen Antenne (15) vorgesehen ist, daß eine Signalverarbeitungsschaltung, die aus einer flexiblen Folie (25) besteht, in ihrer Lage im Gehäuse fest gehaltert ist und daß Wählknöpfe (12), ein Empfangslautsprecher (14) und ein Übertragungsmikrophon (13) an der Vorderfläche des Gehäuses angeordnet sind.

2. Schnurloses Telephon nach Anspruch 1, dadurch gekennzeichnet, daß die Wählknöpfe (12), der Empfangslautsprecher (14) und das Übertragungsmikrophon (13) in Kämme der Wellenfläche der Gehäusevorderfläche fest eingepaßt sind.

3. Schnurloses Telephon nach Anspruch 1, dadurch gekennzeichnet, daß das Gehäuse (11) des Telephons aus Silikonkautschuk besteht.

## Revendications

1. Téléphone sans fil du type qui transmet et reçoit des ondes radio pour constituer des conversations, caractérisé en ce qu'un boîtier (11) dudit téléphone est fabriqué dans un matériau doux en forme de feuille dont une surface frontale a la forme d'une surface ondulée et dont la surface arrière a la forme d'une surface plane, qu'une antenne de transmission et de réception des signaux a la forme d'une antenne flexible (15), qu'un circuit de traitement de signaux, composé d'un film flexible (25), est monté de façon fixe à l'intérieur dudit boîtier, et que des boutons de cadran (12), un haut-parleur de réception (14) et un microphone de transmission (13) sont disposés sur la surface frontale dudit boîtier.

2. Téléphone sans fil selon la revendication 1, caractérisé en ce que lesdits boutons de cadran (12), ledit haut-parleur de réception (14) et ledit microphone de transmission (13) sont montés de façon fixe sur les nervures de la surface ondulée de la surface frontale dudit boîtier.

3. Téléphone sans fil selon la revendication 1, caractérisé en ce que ledit boîtier (11) dudit téléphone est fabriqué dans du caoutchouc au silicium.
